# EUROPEAN PATENT APPLICATION

(11) **EP 1 543 724 A1**
(43) Date of publication of application: **22.06.2005**
(21) Application number: 04425900.0
(22) Date of filing: 29.11.2004
(51) Int. Cl.: A22C 7/00

(54) **Automatic or semiautomatic press for mincemeat with tools and interchangeable dies for the production of meat pizzas and meat cakes**

(30) Priority: 19.12.2003 IT Ba20030026
(71) Applicant: Convertini Nicola, 74015, Martina Franca (TA) (IT)
(72) Inventor: Convertini Nicola, 74015, Martina Franca (TA) (IT)

(57) **Abstract**

Automatic or semiautomatic press for mincemeat with tools 1) and dies 2) interchangeable for the production of meat pizzas and meat cakes, so that, the crushing of mincemeat in realized directly in common aluminium trays, and the movement of mobile parts is driven by electro-mechanic of fluid-dynamic engines.

## Description

The presses for the realization of semi finished and finished products of meat let butchers obtain disks of crushed mincemeat of regular size quickly.
Presses available on the market allow to manufacture mincemeat disks of few centimetres of diameter, 10 or 12; the shape of the obtained product is always a circular disk commonly called hamburger.

Its width depends exclusively on the quantity of introduced mincemeat, therefore the geometry of tools is chosen so that the diameter of the piston is a little less of the diameter of the cylinder, in fact the mincemeat lays completely and uniformly on the bottom of the cylinder because it does not find any possible exit during the crushing.

For disks of much bigger diameter have to be obtained and simultaneously disks of independent thickness from the dosage of the mincemeat, presses supplied from the technical note are inadequate; moreover the removal of a product of such dimensions with the hands would involve its sure damaging.

The aforesaid problems have been overcame cleverly by means of the press planned by the same inventor, with number of application BA200U000028. For means of truncated-conic interchanging tools, this press allows the crushing of mincemeat in aluminium trays. Unfortunately, as it is conceived, the press is not suitable for an industrial environment, because it was designed for manual use.

The purpose of the present invention is to providing the evolution model of press subject of the aforesaid application, which allows the butchers, also the pizza -makers and restaurateurs in general, to prepare easily meat pizzas and meat cakes of any shape and dimension over forty centimetres of diameter.

To such aim, the present model resolves the problem of the manual drive of the aforesaid press. Such model of press is described in more details as follows with the aid of some drawings, which represent a preferred realization.
Dwg 1) Frontal representation of the press
Dwg 2) Representation of the side view A of the press
Dwg 3) View B, that is, representation from the high only of the base of the press.
Dwg 4) Magnified representation of section CC of the B view, with tray and meat already crushed.

This invention, in a preferred execution, consists of a press, of which the movable tool is a particular piston 1) of truncated-conic shape. It is fixed to a movable axle 5) through a slot, for example a "bayonet" slot or threaded slot.
This axis coincides with the movable axle of a generic electro-mechanic or fluid-dynamic engine 4).
The lower tool consists of a valve 2) adapted to hold within its concavity aluminium trays 3) of common market availability, so that the inner surface of the tool perfectly fits to the whole outer surface of the tray. The most important innovation of the present invention consists of the possibility to press the meat directly on the aluminium trays.
The bottom of the lower tool 2) is constituted by the upper surface of the base 9) of the press, while the frame 10) adapted to fit to the perimetric surface of the trays is interchangeable according to the trays and fixed to the base 9) by means of an appropriate number of screws 15).
Being the tray 3) and the piston 1) of truncated-conic shaped, it is necessary the introduction of the regulation of the penetration of the piston and an appropriate dosage of the mincemeat 16), so that, during the crushing, the mincemeat lays over all the inner surface of the tray overflowing appropriately.

The regulation of the travel of the movable axle 5) occurs by means of a reed 5.1) fixed on the axle 5), that, coming down, activates an electromechanical relay 8), which is adjustable sliding on the graded scale 7) by acting the knob 6).

The different dosage of the mincemeat at the same regulation of the travel of the movable axle 5) allows the production of pizzas and cakes, in fact, for the production of the upper layer of cakes, it is appropriate to dose the mincemeat in such a way it lays exclusively on the bottom of the tray 3).

For the production of pizzas or lower layer of cakes, it is necessary to realize crushes that spread the mincemeat on the whole inner surface of the tray, overflowing properly.

For the production of cakes, once the tray of which concavity is completely covered by the layer of mincemeat 16), it is necessary to fill it up with stuffing, to put on the disk made as pizza, to turn over it the overflowed mincemeat, and to act with the fingers for a perfect cohesion of both the crushed along the corresponding circumferences.

All the operations can be made easier by means of a preventive interposition of anti-adherent paper between the bottom of the tray and the mincemeat and between the crushed mincemeat and the upper tool 1).
At the centre of the base 9) there is a circular hole, within which there is a piston 13) of appropriate diameter called "recovery piston", see Dwg 4).
The upper surface of the piston is perfectly flat and lined up with the bottom of the lower valve 2) during the crushing of the mincemeat.

When the upper tool 1) lifts, after the crush, the recovery piston, driven, for example, by an electro-mechanic or fluid-dynamic engine 11), pushes upwards the tray that, in this way, can be easily caught by the operator, or moved by any opportune systems of automation; in fact, for a completely automatic realization, has been planned the use of a couple of small arms, one pulls the tray in the lower valve, the other, after the crush, pulls the tray, for example, on a conveyor belt.

In this realization, in order to reduce the size of the press, the recovery piston 13) is driven for means of an electric motor who rotates a shaft 12) supplied with cam 12.1).

For a semiautomatic or automatic production is necessary a command system, for example a PLC system, that manages the sequence of movements.

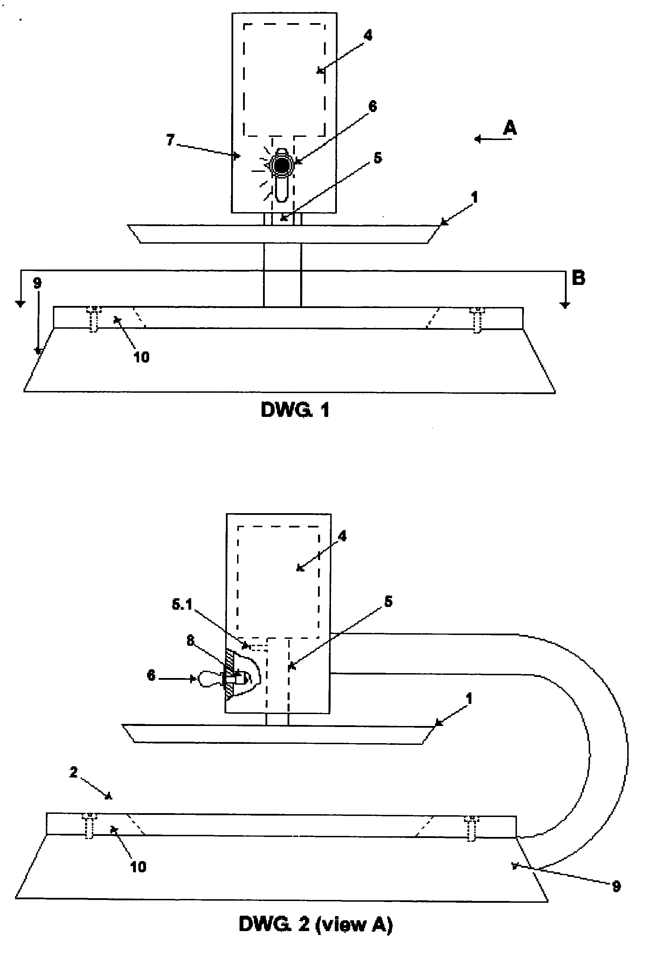

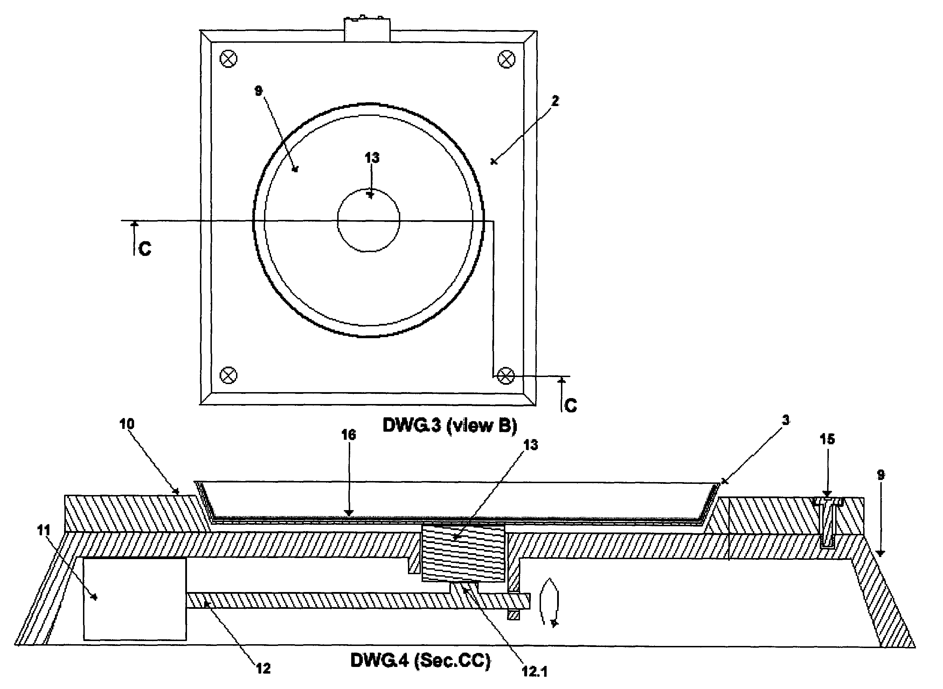

## Claims

1. Automatic or semiautomatic press for mincemeat with interchangeable tools for the production of meat pizzas and cakes; the press being activated for means of an opportune electro mechanic or fluid-dynamic engine; the press being supplied, like the one from which it derives, with interchangeable truncated-conic shaped tools 1) and 2) so that the replacement of those ones allows the production of meat disks of variable dimension and shape;

2. Press, as claimed in claim 1), the whose regulation of the moving axle is realized for means of the reed 5.1) fixed on the axle 5), that, coming down, activates an electromechanical relay 8), which is adjustable sliding on the graded scale 7) by acting the knob 6).

3. Lower tool as claimed in claim 1), consisting of a concavity adapted to hold within itself aluminium trays 3), and supplied with the recovery piston 13) positioned in a hole of appropriate diameter in the base 9) of the press; so that, the recovery piston, driven by an electro-mechanic or fluid-dynamic engine, pushes upward the trays after the pressing.

4. Moving system of the recovery piston 13), as claimed in claim 3), obtained by means of a rotating electric motor with the rotor bounded together to the axis 12) supplied by a cam 12.1) to the raising of the piston.

5. Automatic or semiautomatic press, as claimed in previous claims, equipped with whatever control system for industrial automation.
